# EUROPEAN PATENT APPLICATION

(11) **EP 4 151 592 A1**
(43) Date of publication of application: **22.03.2023**
(21) Application number: 21306270.6
(22) Date of filing: 15.09.2021
(51) Int. Cl.: C01B 21/092, C01B 21/093, H01G 11/58, H01M 10/0525

(54) **SOLVENT-FREE PROCESS FOR PREPARING A SALT OF BIS(FLUOROSULFONYL)IMIDE**

(71) Applicant: RHODIA OPERATIONS, 69003 Lyon (FR)
(72) Inventor: SCHMITT, Etienne, F-69510 Soucieu-en-Jarrest (FR)
(74) Representative: Benvenuti, Federica

(57) **Abstract**

The present disclosure relates to a method for preparing salts of bis(fluorosulfonyl)imide and to a method for preparing alkali metal salts of bis(fluorosulfonyl)imide from said bis(fluorosulfonyl)imide salts. More specifically, the invention provides a new method for producing these salts of bis(fluorosulfonyl)imide which is implementable at industrial scale and providing high-purity bis(fluorosulfonyl)imide salts.

## Description

### Technical field

The present invention relates to a method for preparing salts of bis(fluorosulfonyl)imide and to a method for preparing alkali metal salts of bis(fluorosulfonyl)imide from said bis(fluorosulfonyl)imide salts. More specifically, the invention provides a new method for producing these salts of bis(fluorosulfonyl)imide which is implementable at industrial scale and providing high-purity bis(fluorosulfonyl)imide salts.

### Background

Bis(fluorosulfonyl)imide and salts thereof, in particular the lithium salt of bis(fluorosulfonyl)imide (LiFSI), are useful compounds in a variety of technical fields.

The production of bis(fluorosulfonyl)imide and salts thereof is described in the literature. Among the various technologies described, the majority uses a fluorination reaction with a fluorinating agent in a solvent.

Notably, WO 2017/090877 A1 (CLS) describes a method for producing lithium bis(fluorosulfonyl)imide comprising the steps of: (1) reacting bis(chlorosulfonyl)imide with a fluorinating reagent in a solvent, followed by treatment with an alkaline reagent, thereby producing ammonium bis(fluorosulfonyl)imide; and (2) reacting the ammonium bis(fluorosulfonyl)imide with a lithium base. The solvent used in step (1) is selected from the group consisting of alkyl ketones, including acetone, methyl ethyl ketone, and methyl isopropyl ketone; alcohols, including methanol, anhydrous ethanol, 1-propanol, and isopropanol; alkyl nitriles, including acetonitrile, and propionitrile; and ethers, including tetrahydrofuran, and dialkoxyalkane. The solvent is then removed by distillation and concentration under reduced pressure.

WO 2012/117961 A1 (Nippon Soda) describes a process for producing a fluorosulfonylimide salt. According to examples 1 and 2, ammonium di(fluorosulfonyl)imide is prepared from di(chlorosulfonyl)imide in acetonitrile. The solvent is then removed by distillation under reduced pressure.

JP 2016145147 (Nippon Shokubai) relates to a method for providing a fluorosulfonylimide compound represented by the formula (1) by reacting a compound represented by the formula (2) and a compound represented by the composition formula (3) of 1 to 3 equivalence by stoichiometric amount based on 1 mol of the compound in a presence of a solvent of 0 to 4 mass times of the compound.

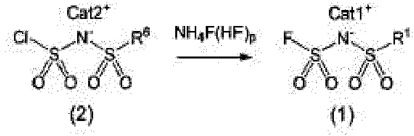

NH₄F(HF)ₚ (3)

where R¹ is a C₁₋₆ fluoroalkyl group, R⁶ is halogen or a C₁₋₆ fluoroalkyl group, Cat1⁺ and Cat2⁺ are monovalent groups and p is an integer of 1 to 10.

JP 2014201453 (Nippon Shokubai) describes a method for producing an alkali metal salt of fluorosulfonyl imide which comprises a step of synthesizing an alkali metal salt of fluorosulfonyl imide in the presence of a reaction solvent containing at least one solvent selected from the group consisting of a carbonate-based solvent, an aliphatic ether-based solvent, an ester-based solvent, an amide-based solvent, a nitro-based solvent, a sulfur-based solvent and a nitrile-based solvent and, subsequently concentrating an alkali metal salt solution of fluorosulfonyl imide by distilling off the reaction solvent in the coexistence of the reaction solvent and at least one poor solvent for the alkali metal salt of fluorosulfonyl imide selected from the group consisting of an aromatic hydrocarbon-based solvent, an aliphatic hydrocarbon-based solvent and an aromatic ether-based solvent, the concentration step includes the step of mixing the above poor solvent with the reaction solution containing the reaction solvent and an alkali metal salt of fluorosulfonyl imide.

As described in the literature, the production of bis(fluorosulfonyl)imide and salts thereof by fluorination takes place in solvents, for example organic solvents, in order to disperse the reactive entities and allow them to react. However, such solvents need to be removed after reaction in order to obtain an *as pure as possible* product which can be used for battery applications. The step for removing the solvent adds to the complexity of the industrial process, as well as its overall cost. In addition, before being implemented in such processes, the solvents typically have to be treated to remove the residual amount water, as only anhydrous solvent, where the residual amount of water is in the ppm amount, are actually to be used.

An object of the present invention is to provide a simpler production process of salts of bis(fluorosulfonyl)imide, which does not require the distillation of the reaction solvent.

WO 2012/096371 A1 (Sumitomo Electric Ind) relates to a method for producing KN(SO₂F)₂ by adding HN(SO₂Cl)₂ (liquid form) drop-wise to KF (powder form) under solvent-free dry conditions, to form an intermediate product, and then allowing the intermediate product and KF to react with each other in an aqueous solvent. More precisely, according to the method described in this document, in a first step, one chlorine element of HN(SO₂Cl)₂ is substituted with fluorine to lead to an intermediate product which is the alkali metal salt KN(SO₂Cl)(SO₂F); and in a second step, the other chlorine element is substituted with fluorine to lead to the alkali metal salt KN(SO₂F)₂. In accordance with such a two-stage step, because HN(SO₂Cl)₂ is converted into an alkali metal salt KN(SO₂Cl)(SO₂F), as a result, it becomes possible to use water in the second step, as water dissolves the alkali metal fluoride.

According to this document, the first part of reaction takes place under solvent-free dry conditions, by dropping of the reactant in a liquid form onto the second reactant, which is in powder form. This leads to a paste-like intermediate product, which is very difficult to handle industrially. Additionally, because the overall conversion of HN(SO₂Cl)₂ into KN(SO₂F)₂ is conducted in two steps with an individualized intermediate, the yield of the reaction is negatively impacted, as well as the level of impurities of the final product.

An object of the present invention is to provide a method for preparing salts of bis(fluorosulfonyl)imide X₁N(SO₂F)₂, with X₁ being K⁺, Na⁺ or an onium cation (for example NH₄⁺), such method being implementable at industrial scale and providing high-purity bis(fluorosulfonyl)imide salts. In particular, the method of the present invention is carried out in the presence of the molten reactant, for example molten NH₄N(SO₂Cl)₂, or in the presence of the molten reaction product, for example molten KN(SO₂F)₂ or molten NH₄N(SO₂F)₂, acting to disperse the reactants, and in the absence of solvent (or in the presence of a very limited quantity of solvent).

### Summary

The present invention relates to a process for preparing a salt of bis(fluorosulfonyl)imide of formula (I):

[F-(SO₂)-N⁻-(SO₂)-F]ₙ X₁ⁿ⁺ (I)

wherein:
- X₁ⁿ⁺ is a cation selected from the group consisting of K⁺, Na⁺ and an onium cation, and
- n is an integer from 1 to 3 representing the valence of the cation,
the process comprising the fluorination of a bis(chlorosulfonyl)imide of formula (II):

[Cl-(SO₂)-N⁻-(SO₂)-Cl]ₙ X₁ⁿ⁺ (II)

with anhydrous hydrogen fluoride (III),
wherein the process is carried out in molten salt of bis(fluorosulfonyl)imide of formula (I) and/or molten salt of bis(chlorosulfonyl)imide of formula (II), in the absence of solvent or in the presence of an amount of solvent less than 5 wt. % based on the total weight of the reaction mixture.

The present invention also relates to a salt of bis(fluorosulfonyl)imide of formula (I):

[F-(SO₂)-N⁻-(SO₂)-F]ₙ X₁ⁿ⁺ (I)

wherein:
- X₁ⁿ⁺ is a cation selected from the group consisting of K⁺, Na⁺ and an onium cation, and
- n is an integer from 1 to 3 representing the valence of the cation,
such salt being obtainable by the process of the present invention, which is characterized in that its amount of solvent is less than 100 ppm, for example less than 50 ppm.

The present invention also relates to a process for preparing an alkali salt of bis(fluorosulfonyl)imide of formula (V),

F-(SO₂)-NX₃-(SO₂)-F (IV)

wherein X₃ represents Li or Cs, preferably Li, comprising the steps of:
(a) preparing a salt of bis(fluorosulfonyl)imide of formula (I) as described herein, and
(b) reacting the salt of bis(fluorosulfonyl)imide (I) with an alkali agent consisting in a lithium salt or a cesium salt.

The present invention also relates to a salt of bis(fluorosulfonyl)imide of formula (IV):

F-(SO₂)-NX₃-(SO₂)-F (IV)

wherein X₃ represents Li or Cs, preferably Li
as well as to the use of such salt (IV) in a battery electrolyte solution.

### Disclosure of the invention

In the present application :
- the expressions "between ... and ..." as well as "from...to..." or the like should be understood as including the limits;
- any description, even though described in relation to a specific embodiment, is applicable to and interchangeable with other embodiments of the present invention;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

A **first object** of the present invention is a process for preparing a salt of bis(fluorosulfonyl)imide of formula (I):

[F-(SO₂)-N⁻-(SO₂)-F]ₙ X₁ⁿ⁺ (I)

wherein:
- X₁ⁿ⁺ is a cation selected from the group consisting of K⁺, Na⁺ and an onium cation, and
- n is an integer from 1 to 3 representing the valence of the cation,
   the process comprising the fluorination of a bis(chlorosulfonyl)imide of formula (II):

   [Cl-(SO₂)-N-⁻(SO₂)-Cl]ₙ X₁ⁿ⁺ (II)

   with anhydrous hydrogen fluoride (III),
   wherein the process is carried out in molten salt of bis(fluorosulfonyl)imide of formula (I) and/or molten salt of bis(chlorosulfonyl)imide of formula (II), in the absence of solvent or in the presence of an amount of solvent less than 5 wt. % based on the total weight of the reaction mixture.

The anhydrous hydrogen fluoride (III) preferably has a high purity, for example above 99.95 mol.%, with less than 1000 ppm of H₂O, less than 10 ppm of SO₂, less than 100 ppm of H₂SO₄, less than 20 ppm of H₂SiF₆ and less than 25 ppm of As.

The salt (I) described herein is characterized by a low residual amount of solvent, advantageously a non-detectable amount of solvent which makes the salt (I) well-suited for many applications, notably battery applications. Indeed, while the salt (I) may not be directly used in a battery product, the purity of this intermediate positively impacts the purity of the Li salt to be used in the battery product when the Li salt is obtained from such intermediate.

The method of the present invention is performed in the melt in the absence of solvents and diluents. More precisely, the method is carried out in molten salt of bis(fluorosulfonyl)imide of formula (I), for example molten KN(SO₂F)₂ or molten NH₄N(SO₂F)₂, and/or molten salt of bis(chlorosulfonyl)imide of formula (II), for example molten NH₄N(SO₂Cl)₂, acting to disperse the reactants and allowing the reactants (II) and (III) to meet and react. Importantly, the method of the present invention is a solvent-free method. In other words, no solvent/diluent, alternatively a very low amount of solvent/diluent, is added to the reaction mixture during the reaction. This is advantageous because first, the step for removing the solvent adds to the complexity of the industrial process, as well as its overall cost. Secondly, the solvents typically need to be treated before being used in such process, as only anhydrous solvent (characterized by a residual amount of water is in the order of the ppm amount) can actually be used.

In the context of the present invention, the term "solvent" is intended to mean a compound which presents the following three cumulative properties of 1/ being present from the beginning to the end of the reaction, possibly added during the process, 2/ unchanged during the process, in other words nonreactive towards the involved reactants, and 3/ having to be removed at the end of the process in case the reaction product is to be in its pure form. Examples of solvents falling within the scope of this definition are given below. For the sake of clarity, the molten salt of bis(fluorosulfonyl)imide of formula (I) used in the process of the present invention does not fall under the definition of "solvent" above-mentioned. The same holds true for the molten salt of bis(chlorosulfonyl)imide of formula (II) used in the process of the present invention.

According to one embodiment of the present invention, the method described herein is carried out or in the presence of a very low amount of solvent, that-is-to-say an amount of solvent less than 5 wt.%, based on the total weight of the reaction mixture. Preferably, according to this embodiment, the amount of solvent is less than 4 wt.%, less than 3 wt.%, less than 2 wt.%, less than 1 wt.%, less than 0.5 wt.%, less than 0.1 wt.%, less than 0.01 wt.%, or less than 0.001 wt.% of solvent, based on the total weight of the reaction mixture. The total weight of the reaction mixture is obtained by adding the weight of the reactants, as well as the weight of the molten salt(s) (I) and/or (II).

Solvents which are typically used in such processes are well-known and extensively described in the literature. Such solvents may be aprotic, for example polar aprotic solvents, and may selected from the group consisting of:
- cyclic and acyclic carbonates, for instance ethylene carbonate, propylene carbonate, butylene carbonate, dimethyl carbonate, ethyl methyl carbonate, diethyl carbonate,
- cyclic and acyclic esters, for instance gamma-butyrolactone, gamma-valerolactone, methyl formate, methyl acetate, methyl propionate, ethyl acetate, ethyl propionate, isopropyl acetate, propyl propionate, butyl acetate,
- cyclic and acyclic ethers, for instance diethylether, diisopropylether, methyl-t-butylether, dimethoxymethane, 1,2-dimethoxyethane, tetrahydrofuran, 2-methyltetrahydrofuran, 1,3-dioxane, 4-methyl-1,3-dioxane, 1,4-dioxane,
- amide compounds, for instance N,N-dimethylformamide, N-methyl oxazolidinone,
- sulfoxide and sulfone compounds, for instance sulfolane, 3-methylsulfolane, dimethylsulfoxide, and
- cyano-, nitro-, chloro- or alkyl- substituted alkane or aromatic hydrocarbon, for instance acetonitrile, valeronitrile, adiponitrile, benzonitrile, nitromethane, nitrobenzene.

Typically, the organic solvent used to carry out such processes may be selected from the group consisting of ethyl acetate, isopropyl acetate, butyl acetate, ethylene carbonate, dimethyl carbonate, ethyl methyl carbonate, propylene carbonate, valeronitrile and acetonitrile, as for example in the literature described in the backgroup section.

According to one embodiment of the process of the present invention, a quantity of the salt of bis(fluorosulfonyl)imide of formula (I), for example NH₄N(SO₂F)₂, is heated above its melting temperature Tm₍ₗ₎, before the addition of the reactants (or reactive entities), in order to be in a molten state (also called liquid state). The reactants, which can be in a powder form, in a slurry form or in a liquid form, are then added into the reaction mixture and allowed to react in order to produce the salt of bis(fluorosulfonyl)imide of formula (I), for example NH₄N(SO₂F)₂. The desired product can be produced under melted form, and later be solidified according to any selected step known from the skilled person. This means that the quantity of such reaction product (i.e. salt of bis(fluorosulfonyl)imide of formula (I)) increases over the reaction time. In other words, according to this embodiment of the present invention, the molten reaction product is used to provide a medium to disperse the reactants and allow them to meet and react. No solvent is therefore necessary according to the present invention. This is advantageous, as it significantly simplifies the overall production process since such solvent does not need to be removed after the reaction, in order to obtain a high-purity bis(fluorosulfonyl)imide salt. It presents the additional advantage that no additional step is needed to remove the water for the solvent.

According to another embodiment of the process of the present invention, a quantity of the salt of bis(chlorosulfonyl)imide of formula (II), for example NH₄N(SO₂Cl)₂, is heated above 50°C, for example above 60°C, above 70°C, above 80°C or even above 89°C, before the addition of the fluorinating agent (III), i.e. hydrogen fluoride. The fluorinating agent is then added to the reaction mixture and allowed to react in order to produce the salt of bis(fluorosulfonyl)imide of formula (I), for example NH₄N(SO₂F)₂.

According to yet another embodiment of the process of the present invention, a quantity of the salt of bis(chlorosulfonyl)imide of formula (II), for example NH₄N(SO₂Cl)₂, is heated above the melting temperature Tm₍ₗ₎ of the desired product, for example NH₄N(SO₂F)₂, before the addition of the fluorinating agent (III), i.e. hydrogen fluoride, in order for the reaction mixture to remain in a molten state (also called liquid state) during and after the fluorination step. The reactants are then allowed to react in order to produce the salt of bis(fluorosulfonyl)imide of formula (I), for example NH₄N(SO₂F)₂.

According to the present invention, the salt of bis(chlorosulfonyl)imide (II):

[Cl-(SO₂)-NH-(SO₂)-Cl]ₙ X₁ⁿ⁺ (II)

is reacted with a anhydrous hydrogen fluoride (III).

According to the present invention, X₁ⁿ⁺ represents K⁺, Na⁺ or an onium cation, wherein an onium cation has its usual meaning for the skilled person.

Examples of the onium cation include phosphonium cation, oxonium cation, sulfonium cation, fluoronium cation, chloronium cation, bromonium cation, iodonium cation, selenonium cation, telluronium cation, arsonium cation, stibonium cation, bismutonium cation; iminium cation, diazenium cation, nitronium cation, diazonium cation, nitrosonium cation, hydrazonium cation, diazenium dication, diazonium dication, imidazolium cation, pyridinium cation, quaternary ammonium cation, tertiary ammonium cation, secondary ammonium cation, primary ammonium cation, ammonium NH₄⁺ cation, piperidinium cation, pyrrolidinium cation, morpholinium cation, pyrazolium cation, guanidinium cation, isouronium cation and isothiouronium cation.

Among these, imidazolium cation, pyridinium cation, quaternary ammonium cation, tertiary ammonium cation, secondary ammonium cation, primary ammonium cation, ammonium NH₄⁺ cation, piperidinium cation, pyrrolidinium cation, morpholinium cation, pyrazolium cation, guanidinium cation, and isouronium cation are more preferred.

Examples of onium cations of these types include:
- imidazolium cations such as a 1,3-dimethylimidazolium cation, 1-ethyl-3-methylimidazolium cation, 1-propyl-3-methylimidazolium cation, 1-butyl-3-methylimidazolium cation, 1-pentyl-3-methylimidazolium cation, 1-hexyl-3-methylimidazolium cation, 1-heptyl-3-methylimidazolium cation, 1-octyl-3-methylimidazolium cation, 1-decyl-3-methylimidazolium cation, 1-tetradecyl-3-methylimidazolium cation, 1-hexadecyl-3-methylimidazolium cation, 1-octadecyl-3-methylimidazolium cation, 1-allyl-3-ethylimidazolium cation, 1-allyl-3-butylimidazolium cation, 1,3-diallylimidazolium cation, 1-ethyl-2,3-dimethylimidazolium cation, 1-butyl-2,3-dimethylimidazolium cation, 1-hexyl-2,3-methylimidazolium cation, and 1-hexadecyl-2,3-methylimidazolium cation;
- pyridinium cations such as a 1-ethylpyridinium cation, 1-butylpyridinium cation, 1-hexylpyridinium cation, 1-octylpyridinium cation, 1-ethyl-3-methylpyridinium cation, 1-ethyl-3-hydroxymethylpyridinium cation, 1-butyl-3-methylpyridinium cation, 1-butyl-4-methylpyridinium cation, 1-octyl-4-methylpyridinium cation, 1-butyl-3,4-dimethylpyridinium cation, and 1-butyl-3,5-dimethylpyridinium cation;
- quaternary ammonium cations such as a tetramethylammonium cation, tetraethylammonium cation, tetrapropylammonium cation, tetrabutylammonium cation, tetraheptylammonium cation, tetrahexylammonium cation, tetraoctylammonium cation, triethylmethylammonium cation, propyltrimethylammonium cation, diethyl-2-methoxyethylmethylammonium cation, methyltrioctylammonium cation, cyclohexyltrimethylammonium cation, 2-hydroxyethyltrimethylammonium cation, trimethylphenylammonium cation, benzyltrimethylammonium cation, benzyltributylammonium cation, benzyltriethylammonium cation, dimethyldistearylammonium cation, diallyldimethylammonium cation, 2-methoxyethoxymethyltrimethylammonium cation, N-methoxytrimethylammonium cation, N-ethoxytrimethylammonium cation, N-propoxytrimethylammonium cation and tetrakis(pentafluoroethyl)ammonium cation;

- tertiary ammonium cations such as a trimethylammonium cation, triethylammonium cation, tributylammonium cation, diethylmethylammonium cation, dimethylethylammonium cation, dibutylmethylammonium cation, and 4-aza-1-azoniabicyclo[2.2.2]octane cation;
- secondary ammonium cations such as a dimethylammonium cation, diethylammonium cation, and dibutylammonium cation;
- primary ammonium cations such as a methylammonium cation, ethylammonium cation, butylammonium cation, hexylammonium cation, and octylammonium cation;
- ammonium cation NH₄⁺;
- piperidinium cations such as a 1-propyl-1-methylpiperidinium cation and 1-(2-methoxyethyl)-1-methylpiperidinium cation;
- pyrrolidinium cations such as a 1-propyl-1-methylpyrrolidinium cation, 1-butyl-1-methylpyrrolidinium cation, 1-hexyl-1-methylpyrrolidinium cation, and 1-octyl-1-methylpyrrolidinium cation;
- morpholinium cations such as a 4-propyl-4-methylmorpholinium cation and 4-(2-methoxyethyl)-4-methylmorpholinium cation;
- pyrazolium cations such as a 2-ethyl-1,3,5-trimethylpyrazolium cation, 2-propyl-1,3,5-trimethylpyrazolium cation, 2-butyl-1,3,5-trimethylpyrazolium cation, and 2-hexyl-1,3,5-trimethylpyrazolium cation;
- guanidinium cations such as a guanidinium cation and a 2-ethyl-1,1,3,3-tetramethylguanidinium cation; and
- isouronium cations such as a 2-ethyl-1,1,3,3-tetramethylisouronium cation.

Quaternary ammonium cation, tertiary ammonium cation, secondary ammonium cation, primary ammonium cation, and ammonium cation NH₄⁺ are more preferred, especially those specifically cited in the above list. Ammonium cation NH₄⁺ is the most preferred onium cation.

The salt of bis(chlorosulfonyl)imide of formula (II) is preferably one of the following salts:

Cl-(SO₂)-NK-(SO₂)-Cl (IIa),

Cl-(SO₂)-NNa-(SO₂)-Cl (IIb),

or

Cl-(SO₂)-NNH₄-(SO₂)-Cl (IIc).

One of the reactants (also called sometimes raw materials) involved in the process of the present invention is anhydrous hydrogen fluoride (III).

The anhydrous hydrogen fluoride may be introduced in any form in the reaction mixture. It may be introduced as a liquid or it can be introduced as a gas in the reaction vessel. It may be introduced in the molten salt (I) and/or (II) in a liquid form or in a gas form. It may also be introduced as a gas in the gas phase of the reaction vessel. The anhydrous hydrogen fluoride may be dispersed in the molten salt (I) and/or (II) by any means known from the skilled person.

According to the present invention, the hydrogen fluoride (III) is anhydrous. Moisture content may be preferably below 5,000 ppm, more preferably below 1,000 ppm, below 500 ppm, below 100 ppm, below 50 ppm or even below 10 ppm, as determined by Karl Fisher water titration, for example performed in a glovebox.

In some embodiments, the stoichiometry amount (also called molar amount) of fluorinating agent (III) to bis(chlorosulfonyl)imide (II) is from 0.1:1 to 20:1, for example from 1:1 to 10:1, or from 2:1 to 8:1.

In some embodiments, the stoichiometry amount of fluorinating agent (III) is not less than 2 equivalent per 1 mol of bis(chlorosulfonyl)imide (II), for example between 2 to 10 equivalents per 1 mol of bis(chlorosulfonyl)imide (II). Preferably, the stoichiometry amount of fluorinating agent (III) is between 2 to 8 equivalents per 1 mol of bis(chlorosulfonyl)imide (II), or between 3 to 6 equivalents per 1 mol of bis(chlorosulfonyl)imide (II). More preferably, the stoichiometry amount of fluorinating agent (III) equals to 4 ± 0.8 equivalents or to 4 ± 0.5 per 1 mol of bis(chlorosulfonyl)imide (II).

The process of the present invention may be carried out in a batch, semi-batch or continuous mode.

According to an embodiment, the process is carried out in a continuous or semi-continuous manner, and comprises a step of continuously or semi-continuously withdrawing the salt of bis(fluorosulfonyl)imide (I) from the reaction mixture. It is possible, according to the present invention, to semi-continuously add reactants in the reaction mixture and semi-continuously remove the reaction product, considering the prior elimination of the residual HF/HCI content between each sequence.

In some embodiments, the process of the present invention comprises the steps of:
(i) heating a quantity Qo of the salt of bis(fluorosulfonyl)imide (I) and/or salt of bis(chlorosulfonyl)imide (II) at a temperature Ta(°C):
   (i1) higher than the melting point Tm₍ₗ₎ of the salt (I), and/or
   (i2) higher than 50°C, for example above 60°C,
   to produce a molten salt of bis(fluorosulfonyl)imide (I) and/or a molten salt of bis(chlorosulfonyl)imide of formula (II),
(ii) adding anhydrous hydrogen fluoride (III) in a gas form or in a liquid form, to the reaction vessel, for example to the molten salt of bis(fluorosulfonyl)imide (I) and/or to the molten salt of bis(chlorosulfonyl)imide of formula (II),
(iii) possibly adding the bis(chlorosulfonyl)imide of formula (II) to the molten salt of bis(fluorosulfonyl)imide (I).

The temperature Ta(°C) may be equal to or higher than the melting point Tm₍ₗ₎ of the salt of bis(fluorosulfonyl)imide (I). For example, Ta may be equal to or higher than Tm₍ₗ₎ + 2°C or Ta may be equal to or higher than Tm₍ₗ₎ + 5°C.

The temperature Ta(°C) may be equal to or higher than 50°C.

It is possible to predisperse one of the reactants, for example the fluorinating agent (III), in the reaction mixture before the introduction of the second reactant, for example the bis(chlorosulfonyl)imide (II).

In some embodiments, step (ii) may for example itself comprise the steps of:
(ii1) adding the hydrogen fluoride (III) to the molten salt of bis(fluorosulfonyl)imide (I),
(ii2) adding the bis(chlorosulfonyl)imide (II) to the reaction mixture.

According to this embodiment, the bis(chlorosulfonyl)imide (II) may be in a liquid form and may for example be added dropwise in the reaction mixture.

According to step (ii2), the bis(chlorosulfonyl)imide (II) may be heated to a temperature Tb(°C) ranging from 30 to 120°C, prior to be added to the reaction mixture. The temperature Tb(°C) may for example range between 50°C and 100°C, or between 60°C and 100°C. According to a specific embodiment, the bis(chlorosulfonyl)imide (II) is heated to the temperature Tb(°C) = Ta(°C) ± 10°C, for example Ta(°C) ± 5°C. According to another embodiment, the bis(chlorosulfonyl)imide (II) is heated to a temperature Tb(°C) ≤ Ta(°C) + 10°C, or Tb(°C) ≤ Ta(°C).

In some embodiments, step (ii) consists in adding the hydrogen fluoride (III) and the bis(chlorosulfonyl)imide (II), concomitantly to the molten salt of bis(fluorosulfonyl)imide (I).

The addition of the reactants (II) and (III) in the molten salt of bis(fluorosulfonyl)imide (I) may be generally performed sequentially, progressively or continuously. The overall quantities of each reactant may also be added incrementally to the reaction vessel, for example in several time, especially if the process is conducted batch-wise.

Batch reactor, extruder and mixing kneader can for example be used in the present invention. Anti-acidic corrosion material (e.g. PTFE, PFA, etc) can be coated (in other words, lined) inside the chosen reactor.

Reference can be made to industrialized melt mixers or melt blenders.

Mixing kneaders used can comprise any of the known suitable mixing kneaders which permit heating above the melting point of the salt (I) and enable discharge of gaseous products. Suitable mixing kneaders generally have one, or preferably at least two, rotating shafts which are parallel to the axis, of which the main shaft can have areas with kneading elements arranged on their periphery. The mixing kneader may have a rotor which is operated at a rotation rate in the range from 5 to 50 revolutions per minute, particularly preferably from 7.5 to 40 revolutions per minute, and in particular from 10 to 30 revolutions per minute. An advantage of the mixing kneaders used in the invention is that the residence time can be substantially longer than in an extruder. Venting is moreover substantially easier and can be carried out to a greater extent, thus permitting easy discharge of the gaseous products. The shear rate of the invention can moreover be established more easily in a mixing kneader. Various feed systems for the reactants can be used in a continuously operated mixing kneader. Liquid metering can be used where molten reactants are involved.

Some of the steps or all steps of the method according to the invention are advantageously carried out in equipment capable of withstanding the corrosion of the reaction medium. For this purpose, materials are selected for the part in contact with the reaction medium that are corrosion-resistant, such as the alloys based on molybdenum, chromium, cobalt, iron, copper, manganese, titanium, zirconium, aluminum, carbon and tungsten, sold under the Hastelloy^{®} brands or the alloys of nickel, chromium, iron and manganese to which copper and/or molybdenum are added, sold under the name Inconel^{®} or MonelTM, and more particularly the Hastelloy C276 or Inconel 600, 625 or 718 alloys. Stainless steels may also be selected, such as austenitic steels and more particularly the 304, 304L, 316 or 316L stainless steels. A steel having a nickel content of at most 22 wt. %, preferably of between 6 wt. % and 20 wt. % and more preferentially of between 8 wt.% and 14 wt. %, is used. The 304 and 304L steels have a nickel content that varies between 8 wt.% and 12 wt.%, and the 316 and 316L steels have a nickel content that varies between 10 wt.% and 14 wt.%. More particularly, 316L steels are chosen. Use may also be made of equipment consisting of or coated with a polymeric compound resistant to the corrosion of the reaction medium. Mention may in particular be made of materials such as PTFE (polytetrafluoroethylene or Teflon) or PFA (perfluoroalkyl resins). Glass equipment may also be used. It will not be outside the scope of the invention to use an equivalent material. As other materials capable of being suitable for being in contact with the reaction medium, mention may also be made of graphite derivatives. Materials for filtration have to be compatible with the medium used. Fluorinated polymers (PTFE, PFA), loaded fluorinated polymers (Viton^{™}), as well as polyesters (PET), polyurethanes, polypropylene, polyethylene, cotton, and other compatible materials can be used.

The process of the present invention may be carried out at atmospheric pressure or under reduced pressure. Preferably, the process of the present invention is carried out under reduced pressure. Performing the reaction under reduced pressure is preferable as it facilitates the removal of the chlorine atoms from the bis(chlorosulfonyl)imide of formula (II) during the process. There is no particular limitation on the pressure that can be applied to the process. The process may, for example, be carried out at a pressure varying between 0.5 bar and 3 bars, for example a pressure varying between 0.7 and 2.5 bars, or between 0.9 and 2 bars.

Alternatively, process of the present invention may be carried out using a sealed reactor equipped with pressure release means. This is one of the preferred embodiments of the present invention.

The process of the present invention may advantageously be carried out under inert atmosphere to avoid moisture contamination. The process of the present invention may for example be carried out under nitrogen or argon.

The process of the present invention may be carried out at a temperature of less than 150°C, for example less than 125°C, or less than 100°C. The process of the present invention may preferably be carried out at a temperature varying between the melting temperature (Tm₍ₗ₎) of the onium salt of bis(fluorosulfonyl)imide of formula (I), for example KN(SO₂F)₂ and NH₄N(SO₂F)₂ and 150°C.

The reaction time of the process of the present invention can be selected freely depending for example on the reactor used, the reaction temperature and the reactant quantities involved. It is preferable that the reaction time is from 1 to 12 hours, particularly from 1.5 to 10 hours or from 2 to 9 hours.

The process may comprise a step consisting in heating a quantity Qo of the salts (I) and/or (II), so that they are in a molten state or a substantially molten state. In some embodiments, this step consists in heating a quantity Qo of the salt of bis(fluorosulfonyl)imide (I) at a temperature Ta(°C) equals to or higher than its melting point Tm₍ₗ₎, to produce a molten salt of bis(fluorosulfonyl)imide (I). In some other embodiments, this step consists in heating a quantity Qo of a mixture of the salts (I) and (II) at a temperature Ta(°C) equals to or higher than the melting points Tm₍ₗ₎, to produce a molten mixture of the salts (I) and (II). The quantity Qo of molten salt may not be less than 20 wt.% of the total weight of the reaction mixture when all the reactive materials have been added. For example, such quantity Qo may be at least 30 wt.%, at least 35 wt.%, at least 40 wt.%, at least 45 wt.%, at least 50 wt.%, at least 55 wt.%, at least 60 wt.%, at least 65 wt.%, at least 70 wt.%. Such quantity Qo may be less than 95 wt.%, less than 90 wt.% or less than 85 wt.%. The total weigh of the reaction mixture when all the reactive materials have been added, may be calculated by adding the weights of all the reactants involved in the process plus the weight of the molten salts (I) and or (II). According to an embodiment, the quantity Qo is 50 ± 10 wt.% of the total weight of the reaction mixture when all the reactive materials have been added.

It is advantageous for the present invention to select the reaction conditions in such a way that conversion C at the end of the process is at least 95 %, particularly preferably at least 98 %, in particular at least 99 %. For the purposes of the present invention, conversion C is the molar proportion of reactive groups that have been reacted, i.e. bis(chlorosulfonyl)imide (II) and fluorinating agent (III). Surprisingly, it has been found that the conversion of reactants (II) and (III) is very high in the process conditions described herein, despite the absence of any solvent or diluent.

In some preferred embodiments, the process is such that the conversion C is at least 95 %, at least 98 %, at least 99 %, at least 99.5 %, at least 99.9 % or at least 99.99%.

The process of the present invention may further comprise cooling the reaction mixture to temperature Tc(°C) of less than 80°C, for example less than 60°C.

The process of the present invention optionally further comprises filtering the reaction mixture. The step of filtration is in order to remove the reaction by-products and/or impurities. The reaction by-products and/or impurities may for example be hydrolysis by-products that are insoluble in the cooled reaction mixture, onium halide insoluble by-products, or other by-products known from the skilled person.

Filtration products (funnels, membranes, Nutsche filters, dryers...) are preferably used for the filtration.

According to the present invention, a pure or substantially pure salt of bis(fluorosulfonyl)imide of formula (I) is obtained at the end of the reaction in a molten form. While bis(fluorosulfonyl)imide of formula (I) may be maintained at a temperature such that it remains liquid, it may also be post-treated so that to be in a powder form, for example in a crystallized or precipitated form. The bis(fluorosulfonyl)imide of formula (I), obtained from the process of the present invention may be used in its molten form, in a crystalized or precipitated form. For example, the molten salt of bis(fluorosulfonyl)imide of formula (I) may be added to an organic solvent at a colder temperature, for example trifluoroethanol, and crystallized before further use. According to yet another embodiment, the salt (I) may be crystallized in the melt, at least partially, and then extracted or reused/recycled in a new reaction cycle. In another embodiment, the molten salt of bis(fluorosulfonyl)imide of formula (I) may be added to an organic solvent, for example dioxane, and precipitated before further use.

The process of the present invention may also comprise additional steps of measuring and/or monitoring at least one of the following reaction parameters:
- the molar ratio of the bis(chlorosulfonyl)imide (II) to the fluorinating agent (III) in the reaction mixture,
- the number of moles of the reactants in the reaction mixture, notably the number of moles of bis(chlorosulfonyl)imide (II),
- the temperature of the reaction mixture (°C),
- the pressure (atm),
- the melt viscosity of the reaction mixture, or
- the fill level of the reactor, for example of the mixing kneader.

A **second object** of the present invention is a salt of bis(fluorosulfonyl)imide of formula (I):

[F-(SO₂)-N⁻-(SO₂)-F]ₙ X₁ⁿ⁺ (I)

wherein:
- X₁ⁿ⁺ is a cation selected from the group consisting of K⁺, Na⁺ and an onium cation, and
- n is an integer from 1 to 3 representing the valence of the cation.

Such salt (I) may advantageously be obtained by the process described above.

The salt of bis(fluorosulfonyl)imide of formula (I) of the present invention may for example be in a molten state, in a crystallized or in a precipitated form.

Advantageously, due to the fact that no solvent is used in the process of the present invention, such salt is pure or substantially pure with no trace of solvent or with a very low amount of residual solvent. This is advantageous because the solvents that are usually used to prepare the salts (I) need to be removed after reaction in order to obtain an as pure as possible product. Indeed, only very pure products can be used for battery applications.

In some preferred embodiments, the amount of solvent in the salt of bis(fluorosulfonyl)imide of formula (I) is less than 100 ppm, for example less than 90 ppm, less than 80 ppm, less than 70 ppm, less than 60 ppm, less than 50 ppm, less than 40 ppm, less than 30 ppm, less than 20 ppm, less than 10 ppm, or even less than 1. This is an advantageous feature of the salt obtained by the process of the present invention. The remaining solvent content may be determined by GC (alternatively headspace GC).

The salt of bis(fluorosulfonyl)imide of formula (I) described here is obtained by a process for preparing a salt of bis(fluorosulfonyl)imide of formula (I):

[F-(SO₂)-N⁻-(SO₂)-F]ₙ X₁ⁿ⁺ (I)

wherein:
- X₁ⁿ⁺ is a cation selected from the group consisting of K⁺, Na⁺ and an onium cation, and
- n is an integer from 1 to 3 representing the valence of the cation,
the process comprising the fluorination of a bis(chlorosulfonyl)imide of formula (II):

[Cl-(SO₂)-NH-(SO₂)-Cl]ₙ X₁ⁿ⁺ (II)

with anhydrous hydrogen fluoride (III),
wherein the process is carried out in molten salt of bis(fluorosulfonyl)imide of formula (I) and/or molten salt of bis(chlorosulfonyl)imide of formula (II), in the absence of solvent or in the presence of an amount of solvent less than 5 wt. % based on the total weight of the reaction mixture.

Such a salt of formula (I) may advantageously be obtained directly from the fluorination of the salt of bis(chlorosulfonyl)imide of formula (II), without any additional purification or separation steps.

The salt of bis(fluorosulfonyl)imide of formula (I) is preferably one of the following salts:

F-(SO₂)-NK-(SO₂)-F (Ia),

F-(SO₂)-NNa-(SO₂)-F (Ib),

or

F-(SO₂)-NNH₄-(SO₂)-F (Ic).

A step of filtration may be used in addition to the above-described process, in order to remove the reaction by-products and/or impurities. The reaction by-products and/or impurities may for example be hydrolysis by-products that are insoluble in the cooled reaction mixture, onium halide insoluble by-products, or other by-products known from the skilled person.

A preferred embodiment of the present invention is directed to an ammonium salt of bis(fluorosulfonyl)imide of formula (Ic):

F-(SO₂)-NNH₄-(SO₂)-F (Ic)

In this preferred embodiment, the salt may contain at least one of the following impurities:
- NH₄Cl,
- NH₄F,
- NH₄HF₂,
- NH₄FSO₃,
- NH₄SO₃NH₂,
- NH₄[N(SO₃H)(SO₂F)] (OFSI), and/or
- NH₄[N(SO₃H)₂] (OSI).

The impurities, such as NH₄Cl and NH₄HF₂, may for example be present in the salt (Ic) in a residual amount of less than 1,000 ppm, less than 500 ppm, less than 200 ppm or less than 100 ppm, preferably less than 90 ppm. Such impurities may be present in the salt (Ic) in an amount of more than 1 ppm, for example more than 5 ppm or more than 10 ppm.

The impurities, such as OFSI and OSI, may for example be present in the salt (Ic) in a residual amount of less than 1,000 ppm, less than 500 ppm, less than 400 ppm or less than 300 ppm, preferably less than 250 ppm or even less than 200 ppm. Such impurities may be present in the salt (Ic) in an amount of more than 1 ppm, for example more than 5 ppm or more than 10 ppm.

The salts (I) of the present invention also preferably exhibit at least one of the following contents of chemical entities:
- a chloride (Cl-) content of below 10,000 ppm, preferably below 5,000 ppm, more preferably below 1,000 ppm, more preferably below 500 ppm, more preferably below 100 ppm, more preferably below 50 ppm, more preferably below 20 ppm; and/or
- a fluoride (F-) content of below 10,000 ppm, preferably below 5,000 ppm, more preferably below 1,000 ppm, more preferably below 500 ppm, more preferably below 100 ppm, more preferably below 50 ppm, more preferably below 20 ppm; and/or.
- a sulfate (SO₄²⁻) content of below 30,000 ppm, preferably below 10,000 ppm, more preferably below 5,000 ppm; and/or
- an iron (Fe) content of below 1,000 ppm, preferably below 800 ppm, more preferably below 500 ppm; and/or
- a chromium (Cr) content of below 1,000 ppm, preferably below 800 ppm, more preferably below 500 ppm; and/or
- a nickel (Ni) content of below 1,000 ppm, preferably below 800 ppm, more preferably below 500 ppm; and/or
- a zinc (Zn) content of below 1,000 ppm, preferably below 100 ppm, more preferably below 10 ppm, and/or
- a copper (Cu) content of below 1,000 ppm, preferably below 100 ppm, more preferably below 10 ppm; and/or
- a bismuth (Bi) content of below 1,000 ppm, preferably below 100 ppm, more preferably below 10 ppm; and/or
- a sodium (Na+) content of below 10,000 ppm, preferably below 5 000 ppm, more preferably below 500 ppm; and/or
- a potassium (K⁺) content of below 10,000 ppm, preferably below 5 000 ppm, more preferably below 500 ppm.

Fluoride and chloride contents may for example be measured by titration by argentometry using ion selective electrodes (or ISE). Sulfate content may alternatively be measured by ionic chromatography or by turbidimetry.

Elemental impurity content may for example be measured by ICP-AES (inductively coupled plasma); more specifically, Na content can be measured by AAS (atomic absorption spectroscopy).

A **third object** of the present invention is a process for preparing an alkali salt of bis(fluorosulfonyl)imide of formula (IV):

F-(SO₂)-NX₃-(SO₂)-F (IV)

wherein X₃ represents Li or Cs, preferably Li.

This process comprises the steps of:
(a) preparing a salt of bis(fluorosulfonyl)imide of formula (I) as described above, and
(b) reacting the salt of bis(fluorosulfonyl)imide (I) with an alkali agent consisting in a lithium salt or cesium salt.

In some embodiments, the present invention relates to a process for preparing a lithium salt of bis(fluorosulfonyl)imide of formula (V):

F-(SO₂)-NLi-(SO₂)-F (V)

comprising the steps of:
(a) preparing a salt of bis(fluorosulfonyl)imide of formula (I) as described above, and
(b) reacting the salt of bis(fluorosulfonyl)imide (I) with a lithium salt.

According to the present invention, as described above, a pure or substantially pure salt of bis(fluorosulfonyl)imide of formula (I) is obtained. This means that, according to an embodiment, step (b) may be performed directly with the salt (I), for example in a molten form, as obtained according to step (a), for example without any further purification. Alternatively the salt may be purified before being implemented in step b). For example, the molten salt of bis(fluorosulfonyl)imide of formula (I) may be added to an organic solvent, for example trifluoroethanol, which may be cooler. In that case, it is expected that the salt (I) crystallize before performing step (b).

According to yet another embodiment, the salt (I) may be crystallized in the melt, at least partially and then extracted or reused/recycled in a new reaction cycle, by electing a temperature allowing the at least partial crystallsation of the salt of bis(fluorosulfonyl)imide of formula (I).

A **fourth object** of the present invention is a salt of bis(fluorosulfonyl)imide of formula (IV):

F-(SO₂)-NX₃-(SO₂)-F (IV)

wherein X₃ represents Li or Cs, preferably Li.

Such salts (IV) may preferably be obtained by the process described above.

The salts (IV) of the present invention also preferably exhibit at least one of the following contents of chemical entities:
- a chloride (Cl-) content of below 10,000 ppm, preferably below 5,000 ppm, more preferably below 1,000 ppm, more preferably below 500 ppm, more preferably below 100 ppm, more preferably below 50 ppm, more preferably below 20 ppm; and/or
- a fluoride (F-) content of below 10,000 ppm, preferably below 5,000 ppm, more preferably below 1,000 ppm, more preferably below 500 ppm, more preferably below 100 ppm, more preferably below 50 ppm, more preferably below 20 ppm; and/or.
- a sulfate (SO₄²⁻) content of below 30,000 ppm, preferably below 10,000 ppm, more preferably below 5,000 ppm; and/or
- an iron (Fe) content of below 1,000 ppm, preferably below 800 ppm, more preferably below 500 ppm; and/or
- a chromium (Cr) content of below 1,000 ppm, preferably below 800 ppm, more preferably below 500 ppm; and/or
- a nickel (Ni) content of below 1,000 ppm, preferably below 800 ppm, more preferably below 500 ppm; and/or
- a zinc (Zn) content of below 1,000 ppm, preferably below 100 ppm, more preferably below 10 ppm, and/or
- a copper (Cu) content of below 1,000 ppm, preferably below 100 ppm, more preferably below 10 ppm; and/or
- a bismuth (Bi) content of below 1,000 ppm, preferably below 100 ppm, more preferably below 10 ppm; and/or
- a sodium (Na+) content of below 10,000 ppm, preferably below 5 000 ppm, more preferably below 500 ppm; and/or
- a potassium (K⁺) content of below 10,000 ppm, preferably below 5 000 ppm, more preferably below 500 ppm.

A **fifth object** of the present invention is directed to the use of the salt of bis(fluorosulfonyl)imide of formula (IV) in a battery electrolyte solution.

Should the disclosure of any patents, patent applications, and publications which are incorporated herein by reference conflict with the description of the present application to the extent that it may render a term unclear, the present description shall take precedence.

### EXAMPLES

The invention will be now described in more detail with reference to the following examples, whose purpose is merely illustrative and not intended to limit the scope of the disclosure.

### Example 1 - NH₄FSI salt formation in molten NH₄FSI

Into a pre-dried Hastelloy autoclave equipped with a stirring shaft, 4 baffles and condenser cooled to -5°C, was introduced 50 g of NH₄FSI (252 mmol) using a solid powder doser under nitrogen stream. The powder was melted at 90°C and stirring was maintained for 0.5 hour. 50 g of molten NH₄CSI (216 mmol) were added to the reaction mixture over a time period of one hour using a double-jacketed addition funnel. After 0.5 h at 90°C, 17.2 g of liquid anhydrous HF (860 mmol) were introduced by portions into the vessel under stirring while maintaining the temperature below 100°C, the stirring was continued for 2.5 hours. A stream of nitrogen was flushed through the system during 12 hours to evacuate the excess of HF.

200 g of dioxane were then added to the mixture over 1.5 h while cooling the system naturally. After one additional hour under vigorous stirring, the heterogeneous reaction media was cooled to 25°C and transferred onto a PTFE-filtration funnel. A solid cake was isolated by filtration (PTFE 0,22 µm membrane). The resulting solid cake was washed with 100 g of fresh 1,4-dioxane. The resulting solid cake was dried under vacuum at room temperature for 12 hours.

The solid product was analysed by ¹⁹F NMR and showed a yield of 92.3% in NH₄FSI (79.4 wt.%, containing 20.4 wt.% of 1,4-dioxane as determined by ¹H-NMR).

### Example 2 - NH₄FSl salt formation in molten NH₄CSI

Into a pre-dried Hastelloy autoclave equipped with a stirring shaft, 4 baffles and a condenser cooled to -5°C and pre-heated at 80°C, 83.3 g (360 mmol) of molten NH₄CSI, pre-heated at 80°C, was introduced in the vessel at a rate of about 40 g/h using a double-jacketed addition funnel. 21.6 g of liquid anhydrous HF (1080 mmol) were introduced by portions, while maintaining the reaction mixture below 90°C. The stirring was continued for 6 hours at 90°C. The reaction mixture was stripped with a stream of nitrogen for 12h.

250 g of 1,4-dioxane was then added to the reaction mixture under stirring. After 1h, the resulting suspension was transferred into a filtration equipment under nitrogen, and the resulting solid was isolated by filtration. The filtrated solution was then cooled to 10 °C in 2 hours. Crystals were isolated by filtration at 25°C, then washed with 120 g of fresh 1,4-dioxane. The solid was dried under vacuum at room temperature for 12 hours.

The solvated solid product denoted as NH₄FSI-S1 was analysed by ¹⁹F NMR and showed a yield of 93.4% in NH₄FSI (80.1 wt.%, containing 19.8 wt.% of 1,4-dioxane as determined by ¹H-NMR).

### Example 3 - Bis(fluorosulfonyl)imide lithium salt formation

Under nitrogen atmosphere, a solution of 8.8 g NH₄FSI-S1 (0.352 mmol), as obtained from Example 1, was dissolved in 60 g of Ethyl Methyl Carbonate (EMC). 14.8 g of solid LiOH.H₂O (0.352 mmol) was added to the vessel at room temperature in 10 minutes. After 1 hour of stirring, the conversion of NH₄⁺ ions (as measured by NaOH titration) was greater than 90 %. The medium was concentrated a first time under reduced pressure (P= 20mbar, T= 0°C). 120 mL of EMC was added and the concentration was performed a second time under the same conditions.

The concentrated solution was dried under vacuum pressure at 30°C for 24 hours. 5 g of a viscous transparent liquid was obtained. ¹⁹F NMR analysis indicated a purity above 99 wt.%. No other fluorinated species was detected.

## Claims

1. A process for preparing a salt of bis(fluorosulfonyl)imide of formula (I):
[ F-(SO₂)-N⁻-(SO₂)-F ]ₙ X₁ⁿ⁺ (I)
wherein:
- X₁ⁿ⁺ is a cation selected from the group consisting of K⁺, Na⁺ and an onium cation, and
- n is an integer from 1 to 3 representing the valence of the cation,
the process comprising the fluorination of a bis(chlorosulfonyl)imide of formula (II):
[Cl-(SO₂)-N-(SO₂)-Cl]ₙ X₁ⁿ⁺ (II)
with anhydrous hydrogen fluoride (III),
wherein the process is carried out in molten salt of bis(fluorosulfonyl)imide of formula (I) and/or molten salt of bis(chlorosulfonyl)imide of formula (II), in the absence of solvent or in the presence of an amount of solvent less than 5 wt.% based on the total weight of the reaction mixture.

2. The process of claim 1, which is carried out under atmospheric pressure and/or using a sealed reactor with pressure release means.

3. The process of any one of claims 1-2, wherein the stoichiometry amount of hydrogen fluoride (III) is between 1 to 10 equivalents per 1 mol of bis(chlorosulfonyl)imide (II).

4. The process of any one of claims 1-3, comprising the steps of:
(i) heating a quantity Qo of the salt of bis(fluorosulfonyl)imide (I) and/or salt of bis(chlorosulfonyl)imide (II) at a temperature Ta(°C):
(i1) higher than the melting point Tm₍ₗ₎ of the salt (I), and/or
(i2) higher than 50°C,
to produce a molten salt of bis(fluorosulfonyl)imide (I) and/or a molten salt of bis(chlorosulfonyl)imide of formula (II),
(ii) adding anhydrous hydrogen fluoride (III) to the molten salt of bis(fluorosulfonyl)imide (I) and/or to the molten salt of bis(chlorosulfonyl)imide of formula (II),
(iii) possibly adding the bis(chlorosulfonyl)imide of formula (II) to the molten salt of bis(fluorosulfonyl)imide (I).

5. The process of claim 4, wherein step (ii) comprises:
(ii1) adding the anhydrous hydrogen fluoride (III) to the molten salt(s),
(ii2) possibly adding the bis(chlorosulfonyl)imide (II) to the reaction mixture.

6. The process of any one of claims 4-5, wherein the quantity Qo is not less than 20 wt.% of the total weight of the reaction mixture when all the reactive materials have been added.

7. The process of any one of claims 1-6, which is carried out at a temperature of less than 100°C.

8. The process of any one of claims 1-7, wherein X₁ⁿ⁺ is NH₄⁺.

9. The process of any one of claims 1-8, for preparing an ammonium salt of bis(fluorosulfonyl)imide of formula (Ic):
[ F-(SO₂)-N⁻-(SO₂)-F ]ₙ NH₄⁺ (IC)
wherein the process comprises the fluorination of a bis(chlorosulfonyl)imide (llc):
[ Cl-(SO₂)-N⁻-(SO₂)-Cl ]ₙ NH₄⁺ (IIc)
with anhydrous hydrogen fluoride (III),
wherein the process is carried out in molten salt of ammonium bis(fluorosulfonyl)imide (cl) and/or molten salt of ammonium bis(chlorosulfonyl)imide of formula (llc), in the absence of solvent or in the presence of an amount of solvent less than 5 wt.% based on the total weight of the reaction mixture.

10. Salt of bis(fluorosulfonyl)imide of formula (I):
[ F-(SO₂)-N⁻-(SO₂)-F ]ₙ X₁ⁿ⁺ (I)
wherein:
- X₁ⁿ⁺ is a cation selected from the group consisting of K⁺, Na⁺ and an onium cation, and
- n is an integer from 1 to 3 representing the valence of the cation,
obtainable by the process of any one of claims 1-7,
wherein the amount of solvent is less than 100 ppm.

11. The salt of claim 10, wherein the amount of solvent is less than 50 ppm.

12. A process for preparing an alkali salt of bis(fluorosulfonyl)imide of formula (V),
F-(SO₂)-NX₃-(SO₂)-F (IV)
wherein X₃ represents Li or Cs, preferably Li,
comprising the steps of:
(a) preparing a salt of bis(fluorosulfonyl)imide of formula (I) according to any one of the claims 1-9, and
(b) reacting the salt of bis(fluorosulfonyl)imide of formula (I) with an alkali agent consisting in a lithium salt and/or a cesium salt.

13. The process of claim 12, wherein step (b) is carried out in an organic reaction medium comprising at least one organic solvent, said organic solvent being selected from the aprotic organic solvents, preferably from the group consisting of ethyl acetate, isopropyl acetate, butyl acetate, ethylene carbonate, dimethyl carbonate, ethyl methyl carbonate, propylene carbonate, valeronitrile and acetonitrile.

14. Use of the salt of bis(fluorosulfonyl)imide of formula (IV) obtained from the process of claim 12 or 13, in a battery electrolyte solution.

15. Battery article or component comprising the salt of bis(fluorosulfonyl)imide of formula (IV) obtained from the process of claim 12 or 13.
